# NEUE EUROPÄISCHE PATENTSCHRIFT

(11) **EP 0 986 300 B2**
(45) Veröffentlichungstag und Bekanntmachung des Hinweises auf die Entscheidung über den Einspruch: **27.03.2013**
(45) Hinweis auf die Patenterteilung: 20.03.2002
(21) Anmeldenummer: 98929390.7
(22) Anmeldetag: 28.05.1998
(51) Int. Cl.: A01N 33/04

(54) **ALDEHYDFREIE DESINFEKTIONSMITTEL FÜR FLÄCHEN UND INSTRUMENTE**
ALDEHYDE-FREE DISINFECTING AGENTS FOR SURFACES AND INSTRUMENTS
AGENT DESINFECTANT EXEMPT D'ALDEHYDE POUR SURFACES ET INSTRUMENTS

(30) Priorität: 31.05.1997 DE 19722757
(43) Veröffentlichungstag der Anmeldung: 22.03.2000
(73) Patentinhaber: Bode Chemie GmbH, 22525 Hamburg (DE)
(72) Erfinder: ANKER, Willem, D-25474 Ellerbek (DE); WINTER-EXTRA, Susanne, D-22549 Hamburg (DE); OSTERMEYER, Christiane, D-22559 Hamburg (DE); FEHLING, Thomas, D-20099 Hamburg (DE); LINK, Monika, D-22523 Hamburg (DE); SCHULTE-SCHREPPING, Dagmar, D-25471 Hasloh (DE)
(74) Vertreter: Schaeffer, Michael
(86) Internationale Anmeldenummer: PCT/EP1998/003147
(87) Internationale Veröffentlichungsnummer: WO 1998/053681

(56) Entgegenhaltungen:
- EP-A- 0 551 975
- EP-A- 0 612 470
- EP-A2- 0 156 275
- WO-A-94/19027
- WO-A1-97/28829
- DE-A1- 4 234 070
- DE-A1- 4 321 566
- Hygiene und Medizin, Band 17 (1992) , mhp-Verlag GmbH, Wiesbaden/DE, 529-534

## Beschreibung

Die Erfindung betrifft aldehydfreie Desinfektionsmittel zur Flächen- und Instrumentendesinfektion.

Es ist bereits eine Vielzahl von unterschiedlich zusammengesetzten Instrumenten- und Flächendesinfektionsmitteln bekannt. Man strebt bei diesen möglichst kurze Einwirkungszeiten bei geringer Temperatur und nichtsdestoweniger gründlicher und nachhaltiger Desinfektionswirkung an. Die Mittel unterscheiden sich darüber hinaus in ihrer Wirksamkeit gegenüber bestimmten Erregern voneinander. Die widerstandsfähigsten Erreger, die insbesondere bei Instrumenten- und Flächendesinfektionsmitteln zu berücksichtigen sind, sind insbesondere Staphylokokken, Streptokokken und Mykobakterien.

Zu den wichtigsten Mykobakterien zählen Mycobacterium tuberculosis, das bei der Instrumentendesinfektion und Flächendesinfektion in Kliniken ein sehr ernst zu nehmendes und nur schwer zu beseitigendes Problem darstellt. Die Mehrzahl der bisher bekannten Desinfektionsmittel zeigt gegen Mykobakterien aber nur eine geringe Wirksamkeit. Aus Pathogenitätsgründen wählt man für die Tests allerdings Mykobakterium terrae, der ein eher höheres Resistenzverhalten aufweist.

Bei den Staphylokokken sind insbesondere Staphylococcus aureus und S. epidermidis von Interesse. Auch gegen diese grampositiven Erreger ist ein großer Teil der Desinfektionsmittel nicht ausreichend effektiv. Vielmehr zeigen die meisten Mittel lediglich bakteriostatische Wirkung.

Breite Verwendung finden Desinfektionsmittel auf Basis von Aldehyden oder Phenolen. Diese weisen allerdings etliche Nachteile auf, da sie als toxikologisch und ökologisch bedenklich gelten und häufig zu Sensibilisierungen insbesondere der Haut und Atmungsorgane führen. Einige gelten als potentielle Kanzerogene. Desinfektionsmittel auf Aldehyd- oder Phenolbasis weisen darüber hinaus einen charakteristischen, durchdringenden und unangenehmen Geruch auf.

Zur Umgehung der obengenannten Nachteile wurden Desinfektionsmittel auf Basis von kationenaktiven Verbindungen wie quaternären Ammoniumverbindungen, im nachfolgenden Quats genannt, Guanidiniumverbindungen oder auch polymeren quaternären Ammoniumverbindungen entwickelt. Diese zeigen ein toxikologisch erheblich besseres Profil, geringere Hautsensibilisierung und sind praktisch geruchlos. Bei Einsatz von Quats bilden sich allerdings unerwünschte Schichten auf den behandelten Flächen, die sich durch übliche Reinigungsverfahren nur schwer oder überhaupt nicht wieder entfernen lassen und bei Laien den Eindruck mangelnder Sauberkeit hervorrufen. Außerdem sinkt die Wirkung von Quats sehr stark bei Eiweißbelastung. Sie sind daher insbesondere für den Einsatz in Flächen- und Instrumentendesinfektionsmitteln nicht gut geeignet. Der entscheidende Nachteil der Quats ist aber eine nur geringe Wirksamkeit gegenüber gramnegativen sowie Mykobakterien.

Weitere Desinfektionsmittel beruhen auf der Verwendung von Alkylaminen. Alkylamine zeigen die gleichen Vorteile gegenüber Aldehyden wie Quats, tragen jedoch nicht zur Schichtbildung bei und haben ein im Vergleich zu den Quats besseres Wirkungsspektrum gegenüber gramnegativen Bakterien.

Ein kombiniertes Desinfektionsmittel ist aus der DE-OS 43 21 566 bekannt, in dem kationenaktive Verbindungen, insbesondere Quats mit Alkylaminen gemischt werden. Auch bei diesem Mittel ist aber mit einer Schichtbildung durch die Quats zu rechnen. In der EP 0 333 143 werden Reinigungsmittel beschrieben, die als bioziden Wirkstoff ein tertiäres Alkylamin, insbesondere N,N-Bis-(3-aminopropyl)-laurylamin, im folgenden als DBTA (Dodecylbispropylentriamin) bezeichnet, in zwingender Kombination mit anionischen Tensiden enthalten. Der EP 0 343 605 ist ein tuberkulozides Desinfektionsmittel zu entnehmen, das ebenfalls als desinfizierende Komponente DBTA enthält und in einem Lösungsmittelgemisch aus Wasser und kurzkettigen Alkoholen gelöst ist. Entgegen der Erwartungen in den beiden vorangehend beschriebenen Schriften, erwies sich DBTA gegenüber Mykobakterien aber nur als mässig wirksam.

Auch die im folgenden beschriebenen Desinfektionsmittel enthalten stets eine Wirkstoffkombination unter Beteiligung von Aminen. So werden in der DE-OS 40 05 784 Desinfektionsmittel beschrieben, die eine Wirkung als Mykobakterizid und Viruzid besitzen sollen. Diese weisen neben kationenaktiven Verbindungen, wie Quats, und nichtionischen Tensiden einen Gehalt an Phenoxyalkohol auf, wobei die pH-Einstellung mit organischen Aminen erfolgen kann. Hier beruht der Hauptanteil der bioziden Wirkung auf den Quats, was zu den oben beschriebenen Nachteilen führt. Die DE 40 33 272 betrifft ein Desinfektionsmittel, das eine Kombination aus 1,2-Benzoisothiazolin-3-on mit Aminen, beispielsweise Lauryldipropylentriamin, enthält, und aus der EP 612 470 ist ein Desinfektionsmittel bekannt, in dem ein Amin mit Alkohol kombiniert wird. Die Alkoholkomponente muss aliphatische Glykolether und die Aminkomponente mindestens ein sekundäres oder tertiäres hydroxygruppenfreies Alkylamin enthalten. Aufgrund der Aminkomponenten ergibt sich eine hohe Viskosität, so dass diese Lösungen insbesondere als Flächen- und Instrumentendesinfektionsmittel nur eingeschränkt einsetzbar sind.

Keines der vorbeschriebenen Desinfektionsmittel zeigt eine Kombination aus kurzer Einwirkzeit bei geringer Temperatur, niedriger Toxizität, geringer Sensibilisierung und Geruchsbildung sowie geringer Schichtbildung und Viskosität bei gleichzeitiger optimaler Wirksamkeit gegenüber Bakterien wie insbesondere Mykobakterien und/oder Staphylokokken.

Es besteht daher immer noch ein Bedarf nach Desinfektionsmitteln, die die geschilderten Nachteile nicht aufweisen.

Zur Lösung der Aufgabe werden aldehydfreie Desinfektionsmittel gemäß Anspruch 1 vorgeschlagen.

Bei den verwendeten Aminen handelt es sich um Di- oder Triamine folgender Formeln:

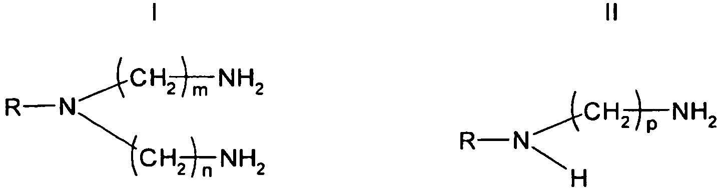

Amine dieser Art sind Dodecylbispropylentriamin (DBTA) und Laurylpropylendiamin, im folgenden als LPDA bezeichnet. Der Einsatz dieser Substanzen in Desinfektionsmitteln ist bekannt.

Der Literatur ist zu entnehmen, dass die Wirksamkeit des Alkylamins DBTA durch Zusätze noch gesteigert werden kann. In der oben aufgeführten EP 612 470 wird beschrieben, dass durch Zusatz von Glykolethern oder Alkoholen eine deutliche Steigerung der Wirksamkeit von DBTA zu erkennen sei. Doch dieser Effekt fällt - wie Versuche zeigen - relativ gering aus und steht in keinem Verhältnis zu den Einsatzmengen an Lösungsmitteln. Ein synergistischer Effekt zwischen DBTA und Alkoholen, wie in der Literatur beschrieben, lässt sich nicht reproduzieren. Außerdem tritt bei Mischungen aus Alkohol und den angegebenen Aminen häufig eine Gelbildung (Nachverdickung) auf, so dass die Einsetzbarkeit solcher Mischungen eingeschränkt ist.

Das aus der Kosmetik bekannte Feuchthaltemittel 2-Pyrrolidoncarbonsäure wurde auf synergistische Effekte in Kombination mit den genannten Aminen überprüft. Es war aber keinerlei Verbesserung der Wirksamkeit festzustellen.

Völlig überraschend stellte sich heraus, dass die Wirksamkeit der genannten Amine durch den gleichzeitigen Zusatz von aliphatischen Dialkoholen und 2-Pyrrolidoncarbonsäure signifikant anstieg und ein starker synergistischer Effekt zu verzeichnen war.

Die Pyrrolidoncarbonsäure trägt zusätzlich zur Erniedrigung der Viskosität bei, so dass die Mischungen aus genannten Aminen und Dialkoholen mit 2- Pyrrolidoncarbonsäure weitgehend dünnflüssig sind. Es können so langfristig lagerbare Konzentrate hergestellt werden, die vor der Verwendung als Desinfektionsmittel mit Wasser verdünnt werden.

Als aliphatische Dialkohole werden bevorzugt Verbindungen mit bis zu 10 C-Atomen, wie beispielsweise 1,2-Propylenglykol, Pentandiol-1,2, Hexandiol-1,6 sowie 2-Ethylhexandiol-1,3 verwendet.

Erfindungsgemäß werden als Amine mindestens die Amine DBTA und LPDA verwendet. Die Auswahl der Amine und die Konzentrationsverhältnisse werden durch die gewünschte mikrobiologische Wirkung gesteuert. DBTA wird zwar als tuberkulozides Desinfektionsmittel beschrieben; in Versuchen ist die Wirksamkeit gegen Mykobakterien jedoch nicht sehr ausgeprägt. DBTA zeigt statt dessen eine ausgezeichnete Wirkung gegenüber Staphylokokken und dies auch unter den Belastungen des Instrumentenhauptversuches. LPDA hingegen zeigt eine hervorragende Wirkung gegenüber Mykobakterien. Eine Mischung von DBTA und LPDA hat daher, insbesondere für die Instrumenten- und Flächendesinfektion, eine ausgewogene mikrobiologische Wirksamkeit.

In einer bevorzugten Ausführungsform werden LPDA und DBTA daher mit 2-Ethylhexandiol-1,3 und 2-Pyrrolidoncarbonsäure eingesetzt. Diese Lösung ist ein hervorragendes Bakterizid insbesondere gegenüber Staphylokokken und Mykobakterien.

Ein besonderer Vorteil der erfindungsgemäßen Mittel besteht darin, dass sie als wasserfreie Konzentrate hergestellt werden können, die über eine langfristige Lagerstabilität verfügen.

Die aliphatischen Dialkohole wie auch die Amine können in unterschiedlichen Mischungen eingesetzt werden. In einem typischen Desinfektionsmittelkonzentrat beträgt die Konzentration der Summe aller Dialkohole zwischen 5 bis 50 Gew.-%, vorzugsweise 10 bis 20 Gew.-%, die der genannten Amine zwischen 1 bis 40 Gew.-%, vorzugsweise 10-30 Gew.-%, und die der 2-Pyrrolidoncarbonsäure zwischen 1 bis 15 Gew.-%, vorzugsweise 5 bis 10 Gew.-%. Solche Mischungen werden vor Gebrauch typischerweise auf 0,1 bis 10% verdünnt, je nach Anwendungszweck.

Die Erfindung wird im folgenden anhand von Beispielen näher erläutert:

### Beispiel 1

Es wurden verschiedene Variationen der Mischungen unter Verwendung von Dialkohlen und üblichen Lösungsmitteln ausgetestet. Die Zusammensetzung der Lösungen ergibt sich aus Tabelle 1.

**Tabelle 1:**

| Varianten der Lösungsmittel am Beispiel einer Aminmischung 3 : 1 (Angaben in Gew.-%) - | | | | | | | | | | |
|---|---|---|---|---|---|---|---|---|---|---|
| | V(A1) | V(B1) | C1 | V(D1) | E1 | V(F1) | G1 | V(H1) | V(J1) | V(K1) |
| Laurylpropylendiamin | 15.6 | 15.6 | 15.6 | 15.6 | 15.6 | 15.6 | 15.6 | 15.6 | 15.6 | 15.6 |
| Dodecylbispropylentnamin | 5.1 | 5.1 | 5.1 | 5.1 | 5.1 | 5.1 | 5.1 | 5.1 | 5.1 | 5.1 |
| L-Pyrrolidoncarbonsäure | 6.5 | - | 6.5 | - | 6.5 | - | 6.5 | - | 6.5 | - |
| iso-Propanol | 15.0 | 15.0 | - | - | - | - | - | - | - | - |
| 1,3-Butandiol | - | - | 15.0 | 15.0 | - | - | - | - | - | - |
| 1,2-Propylenglycol | - | - | - | - | 150 | 150 | - | - | - | - |
| 2-Ethylhexandiol | - | - | - | - | - | - | 15.0 | 15.0 | - | - |
| Hilfsstoffe^{a} und Wasser | ad 100 | ad 100 | ad 100 | ad 100 | ad 100 | ad 100 | ad 100 | ad 100 | ad 100 | ad 100 |

| | | | | | | | | | | |
|---|---|---|---|---|---|---|---|---|---|---|
| V = Vergleichsbeispiel | | | | | | | | | | |

### Beispiel 2

In weiteren Versuchen wurde der Aminzusatz bei Verwendung von 2- Ethylhexandiol variiert. Die Zusammensetzung der Lösungen ist in Tabelle 2 zusammengestellt.

**Tabelle 2:**

| Variation der Amine (am Beispiel von 2-Ethylhexandiol als Lösungsmittel) | | | | | |
|---|---|---|---|---|---|
| | V(A2) | B2 | C2 | D2 | V(E2) |
| Laurylpropylendiamin | 20.7 | 15.6 | 10.35 | 5.1 | - |
| Dodecylbispropylentriamin | - | 5.1 | 10.35 | 15.6 | 20.7 |
| L-Pyrrolidoncarbonsäure | 6.5 | 6.5 | 6.5 | 6.5 | 6.5 |
| 2-Ethylhexandiol | 15.0 | 15.0 | 15.0 | 15.0 | 15.0 |
| Hilfsstoffe und Wasser | ad 100 | ad 100 | ad 100 | ad 100 | ad 100 |

Die mikrobiologischen Versuche haben eindeutig ergeben, dass nur die Kombination aus Aminen, aliphatischen Dialkoholen und Pyrrolidoncarbonsäure einen überadditiven Effekt und eine besondere Wirksamkeit gegen Staphylokokken und Mykobakterien ergibt.

## Patentansprüche

1. Aldehydfreie Desinfektionsmittel für Flächen und Instrumente, mit einem Gehalt an mindestens einem aliphatischen sekundären oder tertiären Amin der allgemeinen Formel 1 oder 11 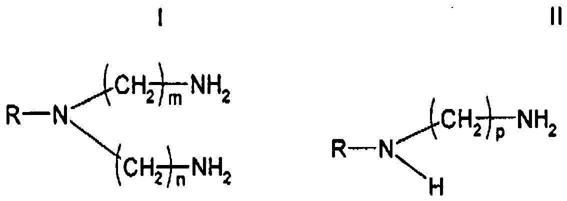 und/oder dessen/deren Salzen und mindestens einem aliphatischen Dialkohol und 2-Pyrrolidoncarbonsäure, **dadurch gekennzeichnet, dass** das Amin zu 1 bis 40 Gew.-%, und die Pyrrolidoncarbonsäure zu 1 bis 15 Gew.-%, vorzugsweise 5 bis 10 Gew.-% enthalten ist und dass sie zwischen 5 und 50 Gew.-% Dialkohole enthalten wobei sie als Amine Dodecylbispropylentriamin und Laurylpropylendiamin enthalten und sie die Amine in einem Verhältnis zwischen 95 : 5 und 5 : 95 enthalten.

2. Aldehydfreie Desinfektionsmittel gemäß Anspruch 1, **dadurch gekennzeichnet, dass** sie aliphatische Dialkohole mit bis zu 10 C- Atomen enthalten.

3. Aldehydfreie Desinfektionsmittel gemäss Anspruch 1 oder 2, **dadurch gekennzeichnet, dass** sie als Dialkohole 1,2-Propylenglykol, 1,3 Butandiol, Pentandiol-1,2, Hexandiol-1,6, oder 2-Ethylhexandiol-1,3 enthalten.

4. Aldehydfreie Desinfektionsmittel gemäss Anspruch 1 bis 3, **dadurch gekennzeichnet, dass** sie zusätzlich Tenside und/oder Korrosionsinhibitoren und/oder Entschäumer und/oder Netzmittel und/oder Komplexierungsmittel und/oder Verdicker und/oder Farbstoffe und/oder Parfümstoffe enthalten.

5. Aldehydfreie Desinfektionsmittel gemäss Anspruch 1 bis 4, **dadurch gekennzeichnet, dass** sie wasserfrei sind.

6. Aldehydfreie Desinfektionsmittel gemäss Anspruch 1 bis 5, **dadurch gekennzeichnet, dass** sie zwischen 10 bis 20 Gew.-% Dialkohole enthalten.

7. Aldehydfreie Desinfektionsmittel gemäss Anspruch 1 bis 6, **dadurch gekennzeichnet, dass** sie zwischen 10 bis 30 Gew.-% Amine enthalten.

## Claims

1. Aldehyde-free disinfectants for surfaces and instruments with a content of at least one aliphatic secondary or tertiary amine with the general formula I or II 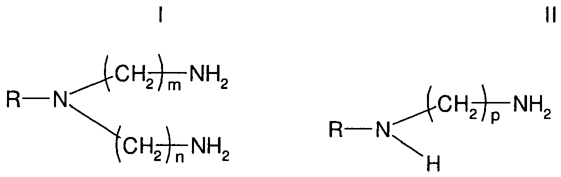 and/or their salts and at least one aliphatic dihydric alcohol and 2-pyrrolidone carboxylic acid, **characterised in that** the amine content is 1 to 40% w/w and the pyrrollidone carboxylic acid content 1 to 15% w/w, preferably 5 to 10% w/w, and that they contain between 5 and 50 % w/w dihydric alcohols, where the amines they contain are dodecyl-bis-propylene triamine and lauryl propylene diamine and the amines are present in a ratio between 95:5 and 5:95.

2. Aldehyde-free disinfectants in accordance with Claim 1, **characterised in that** they contain aliphatic dihydric alcohols with up to 10 C atoms.

3. Aldehyde-free disinfectants in accordance with Claim 1 or Claim 2, **characterised in that** they contain 1,2 propylene glycol, 1,3 butane diol, pentane diol -1,2, hexane diol 1,6 or 2 ethyl hexane diol-1,3 as dihydric alcohols.

4. Aldehyde-free disinfectants in accordance with Claims 1 to 3, **characterised in that** they contain surfactants and/or corrosion inhibitors and/or anti-foaming agents and/or wetting agents and/or complexing agents and/or thickeners and/or dyes and/or perfumes in addition.

5. Aldehyde-free disinfectants in accordance with Claims1 to 4, **characterised in that** they are water-free.

6. Aldehyde-free disinfectants in accordance with Claims1 to 5, **characterised in that** they contain between 10 and 20% w/w of dihydric alcohols.

7. Aldehyde-free disinfectants in accordance with Claims1 to 6, **characterised in that** they contain between 10 and 30% w/w of amines.

## Revendications

1. Composition désinfectante exempte d'aldéhydes pour la désinfection de surfaces et d'instruments, contenant au moins une amine aliphatique, secondaire ou tertiaire, de formule générale (I) ou (II) : 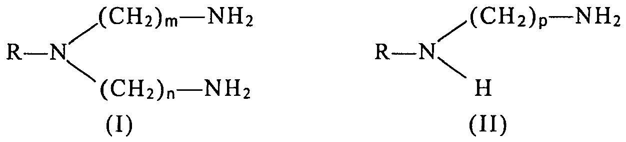 et/ou un ou plusieurs sel(s) d'une telle amine, et au moins un diol aliphatique et de l'acide pyrrolidone-2-carboxylique, **caractérisée en ce qu'**elle contient de 1 à 40 % en poids d'amines et de 1 à 15 % en poids, de préférence de 5 à 10 % en poids, d'acide pyrrolidone-carboxylique et **en ce qu'**elle contient de 5 à 50 % en poids de diols, étant entendu que la composition contient, en tant qu'amines, de la dodécyl-bis-propylène-triamine et de la lauryl-propylène-diamine et qu'elle contient ces amines en un rapport compris entre 95/5 et 5/95.

2. Composition désinfectante exempte d'aldéhydes conforme à la revendication 1, **caractérisée en ce qu'**elle contient des diols aliphatiques comprenant jusqu'à 10 atomes de carbone.

3. Composition désinfectante exempte d'aldéhydes conforme à la revendication 1 ou 2, **caractérisée en ce qu'**elle contient, en tant que diols, du 1,2-propylène-glycol, du butane-1,3-diol, du pentane-1,2-diol, de l'hexane-1,6-diol ou du 2-éthyl-hexane-1,3-diol.

4. Composition désinfectante exempte d'aldéhydes conforme à l'une des revendications 1 à 3, **caractérisée en ce qu'**elle contient en outre des agents tensioactifs et/ou des inhibiteurs de corrosion et/ou des agents anti-mousse et/ou des agents mouillants et/ou des agents complexants et/ou des épaississants et/ou des colorants et/ou des parfums.

5. Composition désinfectante exempte d'aldéhydes conforme à l'une des revendications 1 à 4, **caractérisée en ce qu'**elle ne contient pas d'eau.

6. Composition désinfectante exempte d'aldéhydes conforme à l'une des revendications 1 à 5, **caractérisée en ce qu'**elle contient de 10 à 20 % en poids de diols.

7. Composition désinfectante exempte d'aldéhydes conforme à l'une des revendications 1 à 6, **caractérisée en ce qu'**elle contient de 10 à 30 % en poids d'amines.
